# EUROPEAN PATENT APPLICATION

(11) **EP 4 602 921 A1**
(43) Date of publication of application: **20.08.2025**
(21) Application number: 24158104.0
(22) Date of filing: 16.02.2024
(51) Int. Cl.: A21D 13/22, A21D 13/24, A21D 13/28, A23G 3/34

(54) **GLAZED LAMINATED DOUGH PRODUCT**

(71) Applicant: Mauri Technology B.V., 4878 AK Etten-Leur (NL)
(72) Inventor: BAILEY, Andrew, 4878 AK Etten-Leur (NL); LANSARD, David Bernard Edmond, 4878 AK Etten-Leur (NL); SLABBEKOORN, Marco, 4878 AK Etten-Leur (NL)
(74) Representative: V.O.

(57) **Abstract**

The invention relates to a powdered instant bakery product glazing composition, to a bakery product glazing composition, to a method for preparing a freezer to oven laminated dough, to a laminated dough, to a method for preparing a glazed laminated dough product and to a glazed laminated dough product. The glaze contains at least trehalose and an emulsifier.

## Description

The invention relates to a powdered instant bakery product glazing composition, to a bakery product glazing composition, to a method for preparing a frozen laminated dough, to a laminated dough, to a method for preparing a glazed laminated dough product and to a glazed laminated dough product.

Laminated dough products, such as croissants and various puffed pastries, including *Viennoiserie,* form a popular group of food products. These products may be provided with a glaze for imparting a shiny appearance after baking, for providing a specific taste effect or for both. Conventionally a glazing composition may be made from a sugar, such as sucrose. A jam, e.g. apricot jam, can also be used. Yet another known glazing composition is egg wash.

Convenience requirements in the supply chain and for the retailer/food service providers is driving the need for laminated dough products that can be taken from frozen straight to oven bake-off (at a bakery, a shop, a lunch room, restaurant and the like, or by a consumer) to provide "freshly baked" laminated product for the consumer. Such products are also referred to herein as 'freezer-to-oven' products.

US 6,419,965 B1 relates to a process for the manufacture of dough-based food products, such as croissants. The croissants can be baked directly or frozen before baking. It is further mentioned that the croissants may be glazed before baking. However, no details are provided about the type of glaze, in particular not about a glaze for a freezer-to-oven product.

In EP1 287 743A2 it is observed that the conventionally used glaze needs to be applied equally and consistently to the surface of the baked goods to avoid a detrimental effect upon their appearance. This problem has become of particular importance with the emergence of bake-off foodstuffs. Bake-off foodstuffs in accordance with EP1 287 743A2 involve the manufacture of an unbaked dough mixture which is generally baked at the point of sale, often by unskilled personnel. In certain situations, it may also be impractical to apply the glaze due to the space needed for this operation.

EP 1 287 743A2 proposes to address this problem by applying a glazing composition ("a pre-glazing composition") to an unbaked dough mixture after which the glazed dough mixture is frozen. The glazing composition comprises mainly a "complex sugar, *i.e.* a long chain polysaccharide, which is preferably polydextrose. Polydextrose does not impart significant sweetness to the glaze. As an alternative, a mixture of sugar (presumably sucrose), glucose syrup and modified starch is mentioned.

The inventors found that in particular for laminated freezer-to-oven dough products conventional sugar-based glazing compositions are unsatisfactory. For instance, several carbohydrate-based glazes have been found to dry unsatisfactorily on doughs to be frozen, and result in an undesired stickiness, whereby the glazed dough products stick to each other or the packaging, when frozen.

The inventors found in particular that a glazing composition comprising a specific carbohydrate, a specific emulsifier and a specific fat component is particularly suitable for providing a glaze to a laminated freezer-to-oven dough products. In particular, it was found that such glazing composition contributes to a favourable volume expansion in a controlled way during baking off, without undesirable levels of breaks or other damage to the dough, whilst providing a fresh and nice appearance of the finished product after bake off.

Accordingly, the present invention relates to an instant bakery product glazing powder, comprising an emulsifier and a carbohydrate, the carbohydrate essentially consisting of trehalose or the carbohydrate consisting of trehalose and one or more further carbohydrates, wherein 50-100 wt.% of the carbohydrate is trehalose.

In particular, the instant bakery product glazing powder, according to the invention comprises an emulsifier and a carbohydrate, the carbohydrate essentially consisting of trehalose or a carbohydrates mixture, said carbohydrates mixture comprising at least 50 wt.% of trehalose and up to 50 % of one or more other carbohydrates.

Further, the present invention relates to a kit of parts for a bakery product glazing composition, said kit of parts comprising a first package containing an emulsifier and a second package containing a carbohydrate, the carbohydrate essentially consisting of trehalose or a carbohydrates mixture, said carbohydrates mixture comprising at least 50 wt.% of trehalose and up to 50 % of one or more other carbohydrates.

Further, the invention relates to a bakery product glazing composition, comprising an emulsifier, trehalose, water and a triglyceride oil. Trehalose is typically the only carbohydrate in the glazing composition, if another carbohydrate is present, trehalose is the major carbohydrate, i.e. the trehalose content is typically 50-100 wt.% of the total carbohydrate content.

Further, the invention relates to a method for making a bakery product glazing composition according to the invention, comprising mixing the emulsifier, trehalose, water and a triglyceride oil. In such method , emulsifier and trehalose are advantageously provided by the instant glazing powder according to the invention. It is also possible to use separate emulsifier and trehalose.

Further, the invention relates to a method for preparing a frozen laminated dough product comprising:
- providing a laminated dough;
- shaping the laminated dough (typically providing essentially the shape in which the dough product is to be glazed, frozen and can be heated, in particular baked, to yield a ready-to-consume bakery product);
- applying the bakery product glazing composition according to the invention to at least a part of a surface of the shaped laminated dough, in particular at least about 50 % of the surface area, thereby obtaining a glazed shaped laminated dough; and
- freezing the glazed shaped laminated dough product

Further, the invention relates to the use of an instant bakery product glazing powder according to the invention or a bakery product glazing composition according to the invention in the preparation of a freezer-to-oven laminated dough product, preferably a freezer-to-oven croissant or a freezer-to-oven Danish pastry.

Further, the invention relates to a laminated dough product, comprising a glaze of the bakery product glaze composition according to the invention.

Further, the invention relates to a glazed laminated dough-based bakery product, having a glaze comprising
- an emulsifier;
- a carbohydrate, the carbohydrate essentially consisting of trehalose or a carbohydrates mixture, said carbohydrates mixture comprising at least 50 wt.% of trehalose and up to 50 % of one or more other carbohydrates trehalose, and
- a triglyceride oil.

Further the invention provided a packaging comprising a plurality of frozen laminated dough products according to the invention.

Further, the invention relates to a glazed laminated dough-based bakery product obtainable by a method for preparing a glazed laminated bakery product, comprising heating, preferably baking-off, the shaped laminated dough according to the invention, optionally after thawing

As illustrated in the examples the use of the glazing composition according to the invention (made from the instant glazing powder according to the invention) resulted in a well-integrated glaze on a laminated dough, in particular a croissant, without any detrimental stickiness, as opposed to the comparative glazing compositions. This allows packaging a plurality of dough products according to the invention in the same compartment of the packaging without needing precautions (such as individual wrappings or separation means, e.g. paper sheets) to avoid unacceptable sticking together during storage in a frozen state. Accordingly, the present invention further in particular relates to a packaging, comprising a holding compartment, said holding compartment containing a plurality of dough products according to the invention. The dough products can advantageously touch one or more adjacent dough products in the same compartment. The dough products according to the invention in the packaging are usually frozen. The dough products according to the invention in the packaging can be defrosted.

Further, it has been found that the glaze delays the setting of the crust during baking and allows the bakery product, such as a croissant, to expand before the structure is set. If a standard glaze is applied the glaze set before the croissant has finished expanding and this would result in an undesired "Tiger strip effect".

Terminology used for describing particular embodiments is not intended to be limiting of the invention.

Terminology used herein is generally as commonly used in the art of preparing dough products, in particular laminated dough products, unless stated otherwise or unless it clearly follows otherwise from the context.

A "dough" is thus a mixture comprising flour (typically as a most abundant component based on weight) and water (in a sufficient amount to at least substantially hydrate the flour), which mixture is typically kneadable (generally without being pourable).

The term "dough product" is generally used herein for a shaped dough, essentially shaped in the form in which the dough is to be heated, in particular baked-off, to obtain a ready-to-consume bakery product.

As used herein, the singular forms "a", "an" and "the" are intended to include the plural forms as well, unless the context clearly indicates otherwise. The term "or" is used to mean "and/or", unless the context clearly indicates otherwise. The terms "or" respectively "and/or" include any and all combinations of one or more of the associated listed items. It will be understood that the terms "comprises" and/or "comprising" specify the presence of stated features but do not preclude the presence or addition of one or more other features. Any text or reference signs placed between parentheses shall not be construed as limiting, unless the context clearly indicates otherwise.

It will be understood that when a particular step of a method is referred to as subsequent to another step, it can directly follow said other step or one or more intermediate steps may be carried out before carrying out the particular step, unless specified otherwise.

As is used herein, the term "wt. %", or "weight percentage", or "percentage by weight", generally refers to the mass fraction of a substance in a composition divided by the total mass of said composition.

The term "(at least) substantial(ly)" is generally used herein to indicate that it has the general character or function of that which is specified. When referring to a quantifiable feature, this term is in particular used to indicate that it is at least 50 %, more in particular more than 75 %, even more in particular more than 90 % of the maximum of that feature.

The term "(at least) essential(ly)" is generally used herein to indicate that it has the general character or function of that which is specified. When referring to a quantifiable feature, it generally includes a deviation of 15 % or less from the given value, in particular a deviation of 10% or less, more in particular a deviation of 5% or less.

In the context of this application, the term "about" includes generally a deviation of 15 % or less from the given value, in particular a deviation of 10% or less, more in particular a deviation of 5% or less.

When referring to "fluid" or "liquid", this generally means fluid respectively liquid at 20 °C unless specified otherwise or unless if follows otherwise from the context.

For the purpose of clarity and a concise description, features are described herein as part of the same or separate aspects and preferred embodiments thereof, however, it will be appreciated that the scope of the invention may include embodiments having combinations of all or some of the features described.

The instant bakery product glazing powder, the bakery product glazing composition, respectively the glaze on a dough product and a bakery product according to the invention comprises trehalose and optionally one or more further carbohydrates, with the proviso that trehalose forms 50-100 wt.% of the total carbohydrate content of the glazing powder, glazing composition respectively glaze, preferably at least 80 wt.%, more preferably at least 95 wt.%. Particularly good results have been achieved with a glazing powder, glazing composition respectively glaze wherein the carbohydrate essentially consists of trehalose. If present, the total content of one or more further carbohydrates, usually is in the range of 1-50 wt.%, in particular in the range of 1-20 wt.%, more in particular 1-5 wt.%. of the total carbohydrate content (in which cases the trehalose content is evidently up to 99 wt.% of total carbohydrate content). One or more further carbohydrates in particular be chosen from monosaccharides, disaccharides, oligosaccharides (DP 3-10) and polysaccharides (DP > 10). One may also replace the trehalose or part thereof with one or more polyols (derived from saccharides: glycerol, erythritol, xylitol, sorbitol, mannitol), one or more sugar alcohols (such as maltitol, lactitol, isomalt) or a combination thereof. Thus, the term "carbohydrate" refers herein in particular to those food-grade components that are generally labelled as carbohydrate on food product, i.e. saccharides, sugar alcohols and polyols (derived from saccharides).

The instant bakery product glazing powder, the bakery product glazing composition, respectively the glaze on a dough product and a bakery product according to the invention comprises an emulsifier. In principle any food-grade emulsifier suitable for emulsifying a triglyceride oil can be used. Usually, the emulsifier comprises one or more phospholipids, such as phosphatidylcholine (PC), phosphatidylethanolamine (PE), lysophosphatidyl choline. Particularly suitable emulsifier sources are lecithins. Preferably, the emulsifier or at least a substantial part thereof is provided by egg yolk, in particular egg yolk powder. Thus, advantageously egg yolk is present (powdered egg yolk, at least in case of the instant glazing powder). The egg yolk has been found to contribute to a nice natural glaze (unlike e.g. whole egg contents). Further, its provides a yellow colour, which is appreciated by users. Further, egg yolk is accepted as a clean-label ingredient. If another emulsifier source is used instead of egg yolk , one may add e.g. beta carotene for imparting a yellow colour.

When egg yolk is used as an emulsifier source in a accordance with the invention, it usually is dried egg yolk (a.k.a. egg yolk solids), such as egg yolk powder. Usually, the instant bakery product glazing powder according to the invention, comprising egg yolk as an emulsifier source, comprises 20 - 80 wt.% egg yolk solids (such as powdered egg yolk), preferably 25 - 75 wt.% egg yolk solids, more preferably 35-65 wt. % egg yolk solids, in particular 40-60 wt.% egg yolk solids. The carbohydrate content, preferably the trehalose content, of the instant bakery product glazing powder according to the invention usually is 20 - 80 wt.%, preferably 25 - 75 wt.%, more preferably 35-65 wt. %, in particular 40-60 wt.%. The instant glazing powder may essentially consist of carbohydrate and dried (powdered) egg yolk. Typically the total content of carbohydrate plus dried (powdered) egg yolk in the instant glazing powder is in the range of 90-100 wt.%, in particular 95-100 wt.%, more in particular 99-100 wt.%. Optionally one or more further ingredients may be present. Typically, the total content of said one or more further ingredients, if present, is 10 wt.% or less, in particular 5 wt.% or less, more in particular 1 wt.% or less.

If another emulsifier source than egg yolk is used, the ranges for the relative amounts of emulsifier source and carbohydrate may be adapted based on the rangers, dependent on the emulsifier content of the emulsifier source, taking into consideration that dried egg yolk usually contains about 64 wt.% lipids, of which about 20 to about 24 wt.% emulsifier (phospholipid, mainly phosphatidyl choline) and about 16 wt.% protein. Thus, in an embodiment, the instant bakery product glazing powder according to the invention, has an emulsifier content, preferably a phospholipid content of at least about 2.5 wt.%, preferably at least about 3.0 wt.%, in particular at least about 4.0 wt.%, more in particular at least about 5.0 wt.%. The emulsifier content in the instant bakery powder is usually about 15 wt.% or less, preferably about 12.5 wt.% or less, in particular about 10 wt.% or less, more in particular about 8 wt.% or less.

In an embodiment, wherein another lecithin source than egg yolk is used, besides further ingredients mentioned for an embodiment with egg yolk, such embodiment may in particular also comprise beta carotene as a colourant. Further, it may be advantageous to include some protein to emulate protein in egg yolk, e.g. in about the same amount as present in egg yolk.

The instant glazing powder of the invention can be packaged or used directly.

The instant glazing powder is particularly suitable for the preparation of a bakery product glazing composition for glazing a dough product, in particular a freezer-to-oven bakery product, which preferably can be applied in a fluid form to a surface of a dough product by spraying.

The bakery product glazing composition can be made by mixing the instant glazing powder according to the invention with an adequate amount of triglyceride oil and water. The term triglyceride oil is typically used herein for triglycerides that are liquid at 20 °C, in particular also at 10 °C, more in particular also at °C. It is advantageous to use an oil in particular to obtain a fluid glazing composition. This is desired for ease of processing in an industrial glazing process. A solid glazing composition hasn't been found to work as well industrially, to obtain a well-integrated glaze. Further, it has been found that a triglyceride oil contributes to an appreciated shine of the glaze. Furthermore, the use of a triglyceride oil has been found to suppress the glaze setting like a normal glaze by keeping the crust supple.

Usually, the oil is a vegetable oil. In principle, any vegetable oil can be used. Examples of suitable oils include vegetable oils selected from the group consisting of corn oil, cottonseed oil, canola oil, olive oil, peanut oil, safflower oil, soybean oil, rapeseed oil and sunflower oil, including mixtures thereof. Good results have in particular been achieved with rapeseed oil. Thus, in a preferred embodiment 50-100 wt.%, in particular 75-100 wt.%, more in particular 90-100 wt.% of the triglyceride oil is rapeseed oil.

The bakery product glazing composition is typically fluid at 20 °C, preferably at 15 °C, more preferably at 10 °C, in particular at 5 °C. Fluidity of the glazing composition at a temperature of 15 °C, 10 °C or even lower allows advantageous application to the dough in a fluid form (such as by spraying or brushing), also at a relatively low temperature, such as a temperature of about 10 to about 15 °C, which is desirable for operating frozen dough manufacturing lines.

The bakery product glazing composition is usually made from a instant bakery product glazing powder according to the invention plus at least water and a triglyceride oil. It is also possible to mix the trehalose (and optionally further carbohydrate) and the emulsifier, preferably as part of egg yolk (powder) as individual ingredients with the water and triglyceride oil. Particularly good results have been achieved with a bakery product glazing composition comprising 50-200 parts by weight powdered egg yolk; 50-200 parts by weight carbohydrate, in particular sugar, of which carbohydrate which 50 to 100 wt.% is trehalose; 50-100 parts by weight glyceride oil; and 250-350 parts by weight water. Powdered egg yolk and the carbohydrate are conveniently provided as the instant bakery product according to the invention.

The bakery product glazing composition usually has a weight to weight ratio triglyceride oil to water is in the range of 1:1 to 1:10, preferably 1:2 to 1:8, more preferably of 1:2 to 1:5, in particular of 1:2.5 to 1:4, e.g. about 1:3. The water content of the glazing composition is usually at least 30 wt.%, preferably at least 35 wt.%, in particular at least 40 wt.%, more in particular at least 45 wt.%. The water content of the glazing composition usually is 65 wt.% or less, preferably 60 wt.% or less, in particular 55 wt.% or less, or 50 wt.% or less. The triglyceride oil content of the glazing composition is usually at least 6 wt.%, preferably at least 9 wt.%, in particular at least 12 wt.%. The triglyceride oil content of the glazing composition is usually 30 wt.% or less, preferably 25 wt.% or less, in particular 22 wt. % or less, more in particular 20 wt. % or less. The content of emulsifier/egg yolk and carbohydrate in the glazing composition can be based on the ranges given for the instant glazing powder in combination with said total content of water plus triglyceride oil in the (typically fluid) glazing composition.

Usually, the (typically fluid) bakery product glazing composition according to the invention, has an emulsifier content (preferably a phospholipid content) of at least about 0.5 wt.%, preferably of at least about 1.0 wt.%, more preferably of at least about 2.0 wt.%, in particular of at least about 3.0 wt.%. The emulsifier content (preferably the phospholipid content) preferably is about 5.0 wt.% or less, in particular about 4.5 wt.% or less, more in particular about 4.0 wt.% or less. When egg yolk is used as a lecithin source, the bakery product glazing composition according to the invention, usually comprises at least about 9 wt. % egg yolk solids, preferably at least about 11 wt. % egg yolk solids, more preferably at least about 12 wt.% egg yolk solids, in particular about 14 wt.% egg yolk solids or more. When egg yolk is used as a lecithin source, the egg yolk solids content usually is about 30 wt.% or less, preferably about 26 wt.% or less, more preferably about 24 wt.% or less, in particular about 22 wt.% or less. The total carbohydrate content of the glazing composition according to the invention (of which carbohydrate content 50-100 wt.% is trehalose) usually is at least about 9 wt.%, preferably at least about 12 wt.%, more preferably about 15 wt.% or more. The total carbohydrate content of the glazing composition according to the invention generally is about 30 wt.% or less, preferably about 26 wt. % or less, more preferably about 24 wt.% or less, in particular about 22 wt.% or less.

Particularly preferred is a (typically fluid) glazing composition comprising 9-30 wt.% egg yolk solids; 9-30 wt.% carbohydrate, preferably sugars, of which carbohydrate 50-100 wt.% is trehalose; 30-65 wt.% water; and 6-25 wt.% triglyceride oil (such as vegetable triglyceride oil). In particular good results have been achieved with a (typically fluid) glazing composition having an egg yolk solids content in the range of 12 - 25 wt.% egg yolk solids, a carbohydrate content (in particular a sugar content), of which carbohydrate 50-100 wt. % is trehalose, in the range of 12-25 wt.%; a water content in the range of 35 - 60 wt.%; and a triglyceride content in the range of 9-22 %. More in particular, good results have been achieved with a (typically fluid) glazing composition having an egg yolk solids content in the range of 14 - 20 wt.% egg yolk solids, a carbohydrate content (in particular a sugar content), of which carbohydrate 50-100 wt. % is trehalose, in the range of 14-20 wt.%; a water content in the range of 40 - 50 wt.%; and a triglyceride content in the range of 14-20 %. With respect to water and triglyceride oil content, the weight ratio triglyceride oil to water is usually in the range of 1:1 to 1:10, preferably 1:2 to 1:8, more preferably of 1:2 to 1:5, in particular of 1:2.5 to 1:4, e.g. about 1:3. The weight to weight ratio of the egg yolk solids to the total carbohydrate is usually in the range of 1:4 to 4:1, preferably in the range of 1:3 to 3:1, in particular in the range of 1:2 to 2:1. Usually, the total content of the sum of egg yolk solids plus trehalose plus vegetable triglyceride oil plus water is 80-100 wt.% of the bakery product glazing composition, preferably 90-100 wt.% of the bakery product glazing composition, more preferably 95-100 wt.% of the bakery product glazing composition, in particular 98-100 wt.% of the bakery product glazing composition.

The bakery product glazing composition according to the invention is in particular advantageous for applying a glaze with attractive properties, such as shine, and substantial absence of stickiness to bakery products, more in particular laminated dough products. The bakery product glazing composition has been found highly advantageous for applying a glaze to freezer-to-oven dough products.

The processing steps for the preparation of the glazed dough product, such as the preparation of the dough, the shaping of the dough into a dough product of interest, the application of the glaze composition, and freezing can be based on known dough recipes and processing technology, for a specific type of product, e.g. as described in handbooks or in the prior art cited herein, and the information disclosed herein. Advantageously, the dough is a dough as described herein below for the specific method for preparing a freezer-to-oven glazed laminated dough product according to the invention. Advantageously, the dough is glazed and frozen whilst it is at least substantially non-proofed and unleavened, also when it contains yeast. Typically, the dough comprises cereal flour. Typically, the dough comprises gluten, which can be provided by the cereal flour, as a separate ingredient or both. Further, in particular, one or more steps may be employed as described herein below for the specific method for preparing a freezer-to-oven glazed laminated dough product according to the invention.

The glazing composition is usually applied as a fluid to the surface shaped dough. This can be done by brushing or spraying. The dough to which the glazing is applied is typically non-frozen. The dough to which the glazing is applied is typically non-cooked (non-baked). Thus, the glazing composition is typically applied to the raw shaped (non-frozen) dough. Usually at least an upper part of the surface is at least substantially glazed (the part not resting on a support when being glazed, which part of the surface to be glazed is typically is also the part not resting on a support during heating/bake-off. Usually at least about 40 % of the surface, in particular at least about 50 % of the dough surface is glazed. In principle essentially all of the dough surface can be glazed, but it suffices to glaze less than 100 % of the surface, in particular about 80 % or less, more in particular about 60 % or less. Particularly good results have been achieved with spraying the glazing composition to the shaped dough and thereafter freezing the shaped dough. Typically, the glazed shaped dough for a freezer-to-oven product in accordance with the invention is frozen without having been subjected to a (pre-)heating step, such as a (pre-)baking step. The application of glazing composition to the dough is typically done to the non-heated, non-frozen dough. Thus, temperature during application is generally is in the range of 0-30 °C, in particular in the range of about 4 to about 20 °C. Considering microbiological quality and the fact that after glazing the dough will be frozen, a relatively low temperature, such as a temperature of about 10 to about 15 °C is particularly preferred.

The glazing composition of the invention is particularly suitable to provide an advantageous glaze on a laminated *Viennoiserie* type bakery product. Such products are generally made from a dough in a manner similar to bread, or from puff pastry, but with added ingredients (particularly eggs, butter, milk, cream, sugar). Examples include croissants; pain viennois; pain au chocolat; pain aux raisins; raisin swirls, chouquettes; Danish pastries; xuixo; bugnes; and chausson aux pommes.

Preferably, the glazing composition is used to apply a glaze to a shaped (non-frozen) dough for a laminated bakery product selected from the group consisting of croissants, raisin swirls, *pain au chocolat* and Danish pastry, more preferably selected from the group of croissants and Danish pastry. Particularly good results have been achieved with croissants.

After glazing the (typically without having been cooked) glazed dough product is usually frozen and packaged. The present invention is in particular also advantageous in that a plurality of glazed dough products can be packaged in a single packaging, without needing to be individually wrapped or otherwise protected from touching other products or the packaging, because of their lack of stickiness. It is further an advantageous that this contributes to reducing the risk of unacceptable damage to product when trying to detach them from each other, resulting is less waste (discarded damaged products) for the end user. In particular in view of reducing the risk of unacceptable damage, the glazed dough product is usually first frozen and thereafter packaged.

Thus, in an advantageous embodiment the invention relates to a packaging comprising a plurality of frozen (unbaked) glazed dough products according to the invention

The preparation of the ready-to-consume bakery product according to the invention from the (frozen) shaped laminated dough can be done based on a manner known per se for cooking-off (such as baking-off) the specific type of product. One may directly heat the shaped dough without thawing or one may first let it thaw. The heating may be commenced without first letting the laminated dough leaven, whilst sufficient expansion, if needed, is achieved during the heating. Heating can comprise baking, e.g. in an oven, a grill, an air fryer, microwaving, heating in a superheated steam oven, etc.. The used oven can amongst oven be selected from hot-air ovens and deck-ovens. The oven may be used with steam or without steam. In particular for *Viennoiserie,* especially for croissants, baking-off is preferred.

The composition of the glaze on the (unbaked) glazed dough product typically essentially corresponds to the composition of the glazing composition used for preparing the glaze. Once the product has been cooked (baked or otherwise heated) to obtain the final glazed bakery product, such as a croissant, Danish pastry, *pain au chocolat,* raisin swirl or other *Viennoiserie,* the composition of the glaze will generally be different due to evaporation of liquid, in particular water, and possible chemical reactions (such as maillard reactions in which the carbohydrate may participate). In an advantageous embodiment the glaze of the bakery product, comprises 25-50 wt.% egg yolk solids; 25-50 wt.% carbohydrate, of which carbohydrate 50-100 wt.% is trehalose; and 20-50 wt.% triglyceride oil. In a particularly preferred embodiment the glaze of the bakery product comprises 30-40 wt.% egg yolk solids; 30-40 wt.% carbohydrate, of which 50-100 wt.% is trehalose; and 30-40 wt.% wt.% triglyceride oil. Further components if any (including residual water) is usually less than 15 wt.% of the glaze, in particular 10 wt.% or less, more in particular 5 wt.% or less.

The invention further relates to a specific method for preparing a freezer-to-oven glazed laminated dough product, for which a glazing composition according to the invention or another glazing composition can advantageously be used, in particular another glazing composition comprising a carbohydrate, e.g. one or more carbohydrates as described in the prior art discussed herein. The method has been found in particular to have an advantageous effect on dough elasticity, dough stretchiness or both. Further, the method has been found advantageous to obtain a dough with particularly good baking properties after thawing the frozen dough, in particular with respect to texture. In particular, the method provides a frozen dough which - after thawing - shows a good rising of the dough during baking (or other form of heating to obtain a ready-to-consume product), wherein gas bubbles (developed during rising) are well-trapped. Thus the method contributes to a desirable external layering definition and internal opened structure.

Accordingly, the present invention further relates to a method for preparing a freezer-to-oven glazed laminated dough product, the method comprising
- preparing a dough, which is typically essentially non-leavened and non-proofed; thereafter
- folding the dough, thereby obtaining a laminated dough; thereafter cutting the laminated dough into portions, thereby dough portions for the laminated dough product; thereafter
- cutting the laminated dough into portions thereby obtaining dough portions for the laminated dough product; thereafter
- shaping the dough portions, thereby obtaining a shaped laminated dough product; thereafter
- subjecting the shaped laminated dough product to relaxation; thereafter
- flattening or compressing the shaped laminated dough product, thereby obtaining a flattened or compressed shaped laminated dough product; thereafter
- glazing the flattened or compressed shaped laminated dough product, thereby obtaining the glazed laminated dough product; and
- freezing the glazed laminated dough product, thereby obtaining the freezer-to-oven glazed laminated dough product.

The method is in particular useful for *Viennoisserie,* such as described herein above. Particularly good results have been achieved with freezer-to-oven croissants.

The following disclosure applies in particular to the method of claims 18-22 of the application as filed, and may also be applied as a whole or in part to the methods described herein above respectively to a method according to any of claims 9, 10 or 14 of the application as filed in as far as this would not be contradictory to the teaching of the methods described herein above respectively in said claims 9, 10 or 14. Notably, with respect to the glazing composition the glazing composition described below does not have to be the glazing composition according to the invention.

Usually, the dough temperature prior to freezing is maintained at a temperature in the range of 4-18 degrees C, in particular a temperature in the range of 12-18 degrees. This allows to maintain an essentially non-leavened, non-proofed dough. Accordingly, the process steps usually take place at a temperature below about 20 degrees C, preferably at a temperature of 19 degrees or less, such as at a temperature in the range of 4-18 degrees C or 12-18 degrees C, e.g. at about 15 degrees C, with the proviso that in between steps (or parts thereof) the dough may be kept in a freezer of fridge, whilst the (unglazed) dough remains unfrozen, e.g. for a duration in the range of up to about 60 min, in particular about 5 to about 45 min.

The dough preparation, folding, cutting, shaping (which shaping may comprise rolling out), flattening/compressing, glazing, freezing, optional further steps, can be based on methodology known in the art for the specific type of product. E.g. one or more of said steps can be based on the prior art cited herein.

Typically, the dough comprises yeast, but is processed in said method without any proofing or leavening (fermentation) steps, such that the frozen dough product is non-leavened and non-proofed. Proofing and leavening are generally known process steps for which generally a proof box or fermentation chamber is used, wherein the temperature is controlled (typically between 25 degrees C and 30 degrees C). Usually humidity is also controlled during proofing or fermentation (typically between 80% and 90%). During proofing or leavening, temperature and humidity are used to activate the yeast at its optimal output level of gassing, producing CO₂ to raise the dough. As a result, after leavening/proofing the dough has a considerably higher volume than the corresponding non-leavened, non-proofed dough the dough. Leavening/proofing usually results in an about 2 to about 3 times rise in volume. Accordingly, for maintaining the dough non-leavened, non-proofed, the conditions during processing of the dough till freezing are typically kept outside conditions at which the yeast is substantially active (i.e. typically below 25 degrees C). Accordingly, during processing of the dough till freezing the dough typically does not substantially rise in volume. In order to maintain a temperature at which substantial leavening/proofing is avoided, it is advantageous to cool the dough to a temperature below the temperature at which the processing steps take place, in between at least a number of the process steps, typically by placing the dough in a freezer. In particular, cooling in between folding steps has been found advantageous.

The dough recipe and the dough preparation can be based on known methodology for the intended type of laminated dough product. It typically a dough that is capable of yeast leavening (a fermentable dough). Thus, it typically comprises an effective amount of a yeast for use in a dough products. Such yeast strains, notably baker's yeast strains, are generally known in the art. Yeast content of the dough usually is in the range of 1-12 wt.% based on flour, preferably 2-10 wt.%. In particular for croissants, a yeast content of about 4 to about 9 wt.% based on flour is preferred.

Further, the dough comprises cereal flour. The dough advantageously comprises gluten, which can be part of the cereal flour, e.g. in case of wheat flour, which is a highly preferred flour. For freezer to oven laminated dough products it is advantageous to provide a dough with a relatively high gluten content, compared to the same type of product that is not intended to be frozen before heating (cooking/baking). Thus one may use a flour with a relatively high gluten content, such as hard wheat flour. Further it is possible to add gluten as an ingredient (in addition to or alternatively to using flour with a relatively high gluten content. The total gluten content (provided by the flour plus ingredient gluten, if any) usually is at least 10 wt.%, based on flour, preferably at least 12 wt.%, in particular about 15 wt.% or more. The total gluten content usually is 24 wt.% or less, in particular about 20 wt.% or less. In terms of gluten ingredient, it is preferred to add an amount in the range of about 1 to about 12 wt.%, in particular in the range of about 5 to about 10 wt.%, based on flour. A gluten content in said range for the total gluten content or for ingredient gluten has been found particularly advantageous for a croissant, but may also be applied to other laminated dough products.

Generally, the dough can comprise further usual ingredients for the intended type of laminated dough product, such as water, fat (butter, margarine, shortening), salt, sugar, ascorbic acid improver composition (usually comprising an alpha-amylase, such as fungal alpha amylase). It is also possible to add one or more hydrocolloids. However, good results have been achieved with a dough to which no hydrocolloids have been added that need to be labelled as an ingredient. In particular, good results have also been achieved with a dough to which no gelatine, no chemically modified polysaccharides (like carboxymethyl cellulose, no gum, no pectin have been added as an ingredient). Thus, in a preferred embodiment the dough is essentially free of these ingredients. Such dough may still contain any of these compounds in as far as they are naturally present in one or more other ingredients of the dough, such as cereal pectin in the cereal flour.

Folding may e.g. be based on US 6,429,965. For folding, usually lamination fat, preferably butter, is added to the dough. Preferably the folding, in particular when preparing croissants, comprises a plurality of folding steps, wherein in between a first and a last folding step there is provided at least one storage period at a lower temperature, in particular in a freezer. During folding a substantial amount of energy is used, which can result in a significant rise of temperature. The cooling in between folding steps avoids an undesirably large temperature increase (such as above about 18 degrees C or about 20 degrees C), which can adversely affect the lamination process during folding. In particular, a too high temperature can affect the lamination fat plasticity negatively, which may result in breaks in the laminated dough, which would result in poor layering and bad crumb structure and volume in the end. Thus, folding is usually done at a temperature of 18 degrees C or less, preferably in the range of 10-18 degrees C, in particular about 15 degrees C.

It is further found advantageous to carry out a plurality of folding actions, wherein a number of folding actions is carried out in a first direction and thereafter a further number of folding actions in a second direction, in particular at an angle of about 90 degrees with the first direction. This has in particular been found advantageous for gluten network development.

For instance, good results have been achieved with first folding into two layers, then into four layers, next into six layers, then storing in the freezer, and then another four layers of lamination.

After folding, the folded dough may be cooled again if desired.

Cutting can be done based on known methodology.

Shaping can be done based on known methodology. Shaping of the dough in accordance with the invention typically results in a shaped dough having essentially the shape into which the dough product will be frozen. Thus it typically results in essentially the shape of the product that is to be heated (cooked, baked) to obtain a ready-to consume bakery product. For croissants it usually comprises a rolling-out. Rolling out can be done based on known methodology. For croissants, shaping thus results in a dough product having essentially a croissant shape.

Before flattening, the rolled-out shaped laminated dough product is advantageously subjected to relaxation. Relaxation comprises letting the product rest under non-proofing/non-leavening conditions, i.e. at a suitable temperature as described elsewhere herein. Thus, the relaxation can take place at about the same temperature as the preceding and subsequent step, preferably at a temperature in the range of 4-18 degrees C, more preferably in the range of 10-18 degrees C, in particular at about 15 degrees C. The duration of the relaxation is usually in the range of 5-60 min, preferably in the range of about 10 to about 30 min, e.g. about 15 min.. The relaxation step has been of particular advantage for dough properties, such as described elsewhere herein, like dough elasticity, stretchiness, rising properties after thawing (during heating, in particular baking) or a combination thereof.

Flattening/compressing can be done based on known methodology. Flattening has a positive effect on appearance of the ready-to-consume product, in particular a positive effect on volume of the ready-to-consume product.

Glazing can be done based on known methodology. It is in particular preferred to apply by spraying a fluid glazing composition. Use of a glazing composition in accordance with the invention is in particular preferred. As an alternative one may in particular use a glazing composition wherein the trehalose or part thereof is replaced by one or more other carbohydrates, more in particular one or more saccharides, such as one or more saccharides selected from monosaccharides, disaccharides, oligosaccharides (DP 3-10) and polysaccharides (DP > 10). One may also replace the trehalose or part thereof with one or more polyols, one or more sugar alcohols or a combination thereof.

After glazing, the glazed laminated dough product is frozen. This is usually done essentially immediately after applying the glaze, typically within 30 seconds, in particular within 10 seconds; although in principle one may also wait with freezing for several minutes, e.g. up to 10 min. or more. Freezing is usually done to achieve a core temperature in the product of about minus 10 degrees or less. Advantageously, the glazed dough product is first subjected to shock-freezing, which is typically done at a temperature below the intended storage temperature, in particular at a temperature in the range of minus 50 to minus 25 degrees C, e.g. about 35 degrees C.

Usually the glazed dough product is packaged after freezing. A plurality of frozen dough products can be packaged in a single packaging, without substantial risk of sticking together.

Subsequent storage of the frozen dough product can be done at a known storage temperature for freezer-to-oven dough products, usually in the range of about minus 21 degrees C to minus 4 degrees C, e.g. about minus 10 degrees or less, about minus 15 degrees or less or about minus 18 degrees or less.

The invention further relates to a frozen dough product obtainable by a method according to the invention. The frozen dough product can heated for consumption, in particular baked, based on a known method for the specific product. The invention further relates to a glazed laminated dough-based bakery product obtainable by a method for preparing a glazed laminated bakery product, from the frozen shaped laminated dough product obtainable according to the invention, by heating, in particular baking the dough product, optionally after thawing.

Next the application will be illustrated by the following Examples.

### EXAMPLE 1

A dough for croissant was prepared based on a known recipe, with additional ingredient gluten, as indicated in the following Table, which also shows the lamination butter to be added in the folding stage.

| Ingredient | Weight (g) | % - ppm |
|---|---|---|
| Wheat flour Pelikaan (ex Meneba, Rotterdam) | 1500 | 100.0 % |
| Tap water | 840 | 56.0% |
| Block Yeast (Koningsgist, ex AB Mauri) | 105 | 7.0 % |
| Salt | 22.5 | 1.5 % |
| Butter (ambient) | 150 | 10.0% |
| Sugar | 135 | 9.0% |
| Vital Gluten | 135 | 9.0% |
| | | |
| Ascorbic acid | 0.30 | 200 ppm |
| Improver (comprising fungal amylase) | 0.15 | 100 ppm |
| | | |
| Scaling dough | 2700 | |
| Lamination butter 15°C | 850 | 24% |
| | | |
| | | |

The dough was processed (except when in freezer) in a room having a temperature of about 15 degrees C. The dough was made from all ingredients except for the lamination butter. The dough was kneaded in a spiral mixer for about 8 min. and then kept in a freezer for 5 min. at minus 18 degrees C. The dough was taken out of the freezer and the lamination butter was incorporated in the dough. The dough was subjected to folding: first two layers were folded and directly thereafter four layers (turned before the last step), to get six layers. The layered dough was then kept in the freezer at minus 18 degrees for 2 min. The dough was taken out of the freezer and folded in another four layers, folding direction was at 90 degrees angle compared to previous folding.

The resultant laminated dough was kept in a freezer for 5 min. at minus 18 degrees C, taken out of the freezer and cut with a croissant dough cutter to obtain dough pieces of about 65 grams. The cut pieces were shaped in a croissant shape; use was made of a Rondo Croissomat (pause stand 4.5 calibration and then subjected to relaxation for 15 min (covered with plastic foil). The relaxed shaped pieces were flattened to a final thickness of about 10 mm.

The relaxed shaped pieces were glazed with one of the following glazing compositions:
Glaze 1 (according to the invention): A glaze composition was made having the following composition: 100 parts (16.7 wt.%)trehalose, 280 parts (46.7 wt.%)water, 100 parts (16.7 wt.%) vegetable oil and 120 parts (20 wt.%) powdered egg yolk. First egg yolk powder and water were mixed; next trehalose was added and mixed until dissolved. Next the oil was added and mixed until the oil was emulsified in the mixture. The resultant glaze composition (Glaze 1) was left to stand for about 10 min, then stirred and applied over the croissant.
Glaze 2 (reference): liquid whole egg.
Glaze 3 (reference): MauriShine^{™} (ex AB Mauri, Etten-Leur, NL), a vegan, egg-free, trehalose-free commercially available glazing composition for buns.
Glaze 4 (reference): a conventional glazing composition; a solution of 50 wt.% caster sugar (sucrose) and 50 wt. % water.
Glaze 5 (reference): as Glaze 1 but with dextrose instead of trehalose.
Glaze 6 (reference): as glaze 1 but with caster sugar (sucrose) instead of trehalose.

The glazing composition was evenly applied over the surface of the croissant dough, covering the surface, except for the part resting on the bottom.

The glazed croissant dough products were frozen in a shock freezer (40 min. at minus 35 degrees C), until the core temperature in the product was about minus 10 degrees. Thereafter the frozen product was stored at minus 20 degrees. The frozen products were taken out of the freezer and directly baked (without thawing). Three different settings were used:
Setting 1: MIWE Aeromat Oven, program with normal steam.
Setting 2: MIWE Aeromat Oven, program with half normal steam.
Setting 3: a MIWE condo electrically heated deck oven (using a standard program: 2 FTO croissants, no steam)

The MIWE Aeromat Oven, with steam, is a common bake-off oven found in in-store bakeries. The MIWE Aeromat Oven program with normal steam ensures sufficient steam for proper croissant expansion and baking. The program with half normal steam challenges the effectiveness of the croissant glaze, which aids in expansion during baking.

The MIWE Condo is a deck oven typically found in bakeries and can also mimic a home oven. The MIWI Condo deck oven program with no steam demonstrates how the glaze helps the croissant expand and bake without added moisture in the oven, with steam.

### Results

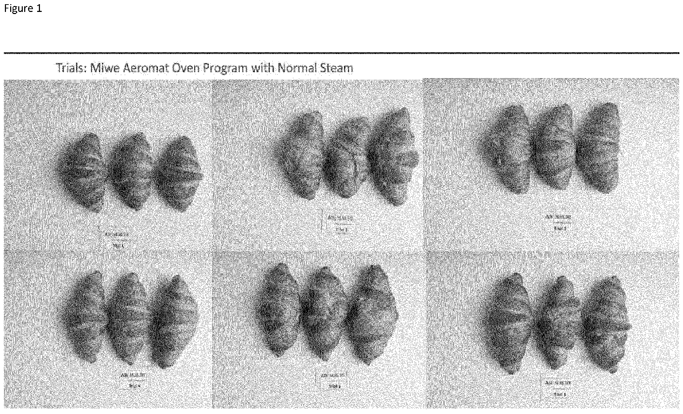

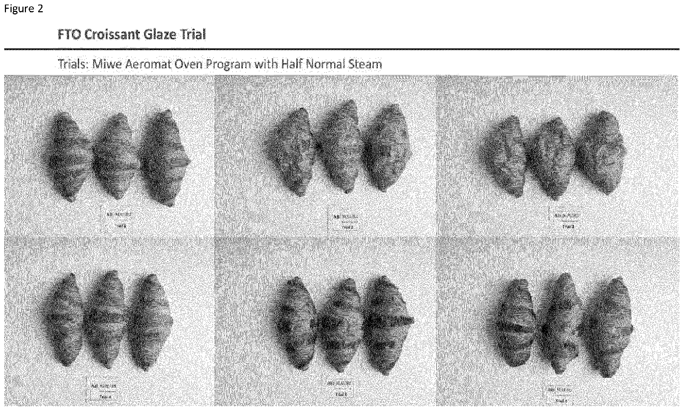

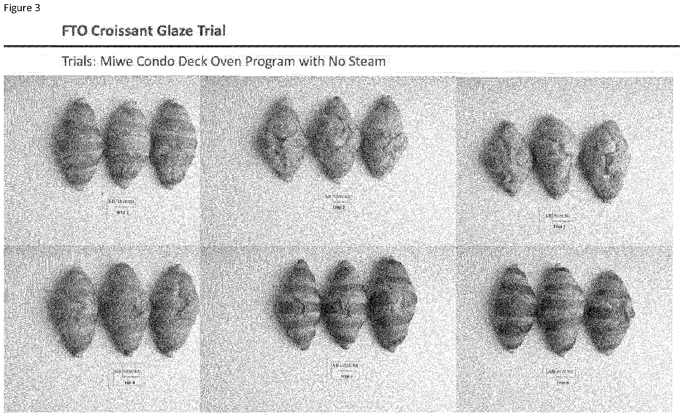

Figures 1-3 show photographs of croissants baked after glazing with one of glazes 1-6 (respectively trials 1-6) and freezing as described above. Figure 1 shows the croissants baked in the Aeromat oven with normal steam; Figure 2 shows the croissants baked in the Aeromat oven with half normal steam; Figure 3 shows the croissants baked in the Condo deck oven without steam.

In Trial 1, Glaze 1 (according to the invention) effectively allowed croissants to expand and maintain their distinctive shape without setting early. The Croissants were dry to the touch, ex freezer, and this enabled easy handling of the Croissants.

However, in Trial 2 using Liquid Whole Egg, the glaze set early across all three oven bake-offs, resulting in restricted exterior expansion and "bursting" of the croissants, leading to a loss of external layering definition.

Similarly, in Trial 3 with Maurishine^{™}, a bun glaze, early setting during baking occurred, particularly evident with lower steam levels, resulting in poorer baked croissants.

Trial 4, using a simple Sugar & Water glaze, proved effective in the oven tests, but the Croissants were too sticky during freezing and undesired residue was left on surfaces due to its sticky nature.

In Trial 5, the glaze wherein trehalose had been replaced by dextrose baked well, but was excessively wet and felt like "sweating" when touched, causing it to rub off onto adjacent croissants, resulting in an inconsistent glaze.

In Trial 6, the replacement of trehalose replaced by sucrose exhibited similar baking qualities to Trial 4 but was slightly less sticky. However, it still presented challenges in handling and resulted in potential glaze transfer onto neighbouring croissants, affecting overall glaze quality.

## Claims

1. Instant bakery product glazing powder, comprising an emulsifier and a carbohydrate, which carbohydrate essentially consisting of trehalose or the carbohydrate consisting of trehalose and one or more further carbohydrates, the bakery product glazing powder having a trehalose content of 50-100 wt.%, based on total carbohydrates.

2. Instant bakery product glazing powder according to claim 1, wherein the emulsifier comprises a phospholipid, preferably egg yolk phospholipid.

3. Instant bakery product glazing powder according to claim 2, comprising 25 - 75 wt.% powdered egg yolk and 25 - 75 wt.% wt.% trehalose, preferably 35 - 65 wt.% powdered egg yolk and 35 - 65 wt.% trehalose, more preferably 40 - 60 wt.% powdered egg yolk and 40-60 wt.% trehalose.

4. Bakery product glazing composition, comprising an emulsifier, a carbohydrate, the carbohydrate essentially consisting of trehalose or the carbohydrate consisting of trehalose and one or more further carbohydrates, wherein 50-100 wt.% of the carbohydrate is trehalose, water and a triglyceride oil.

5. Bakery product glazing composition according to claim 4, wherein the weight to weight ratio triglyceride oil to water is in the range of 1:1 to 1:5, preferably 1:2 to 1:4, e.g. about 1:3.

6. Bakery product glazing composition according to claim 4 or 5, comprising 9-30 wt.% egg yolk solids, 9-30 wt.% trehalose, 30-65 wt.% water and 9-25 wt.% triglyceride oil, preferably 12 - 25 wt.% egg yolk solids, 12-25 wt.% trehalose, 35 - 60 wt.% water and 9-22 wt.% triglyceride oil.

7. Bakery product glazing composition according to claim 4, 5 or 6, wherein the glazing composition is fluid at 15 °C, preferably at 10 °C.

8. Method for making a bakery product glazing composition according to any of the claims 4-7, comprising preparing a mixture of the emulsifier, the trehalose, the water, the triglyceride oil and optionally one or more further components, thereby forming the bakery product glazing composition.

9. Method for preparing a frozen laminated dough product, comprising:
providing a shaped laminated dough;
applying the bakery product glazing composition according to claim 4, 5, 6 or 7 to at least a part of a surface of the shaped laminated dough, in particular to at least about 50 % of the surface area, thereby obtaining a glazed shaped laminated dough, and freezing the glazed shaped laminated dough product.

10. Method according to claim 9, wherein the bakery product glazing composition is applied in fluid form by spraying.

11. Laminated dough product, comprising a glaze of the bakery product glaze composition according to claim 4, 5, 6 or 7.

12. Laminated dough product according to claim 11, wherein the laminated dough product is a dough product for a bakery product selected from the group consisting of *Viennoiserie,* preferably a dough product for a croissant, raisin swirl, *pain au chocolat* or Danish pastry, more preferably a croissant or Danish pastry.

13. Laminated dough product according to claim 11 or 12, wherein the laminated dough product is a frozen freezer-to-oven bake-off laminated dough product.

14. Method for preparing a glazed laminated bakery product, comprising heating, preferably baking-off, the shaped laminated dough according to any of the claim 11-13, optionally after thawing.

15. Glazed laminated dough-based bakery product, having a glaze comprising
- an emulsifier,
- a carbohydrate, the carbohydrate essentially consisting of trehalose or a carbohydrates mixture, said carbohydrates mixture comprising at least 50 wt.% of trehalose and up to 50 % of one or more other carbohydrates trehalose, and
- a triglyceride oil,
preferably a glaze made of a bakery product glazing composition according to any of the claims 4-7.

16. Glazed laminated bakery product according to claim 15, wherein the glazed laminated bakery product is a baked product.

17. Glazed laminated bakery product according to claim 15 or 16, wherein the glazed laminated dough product is *Viennoiserie,* preferably a croissant, a raisin swirl, a *pain au chocolat* or a Danish pastry, more preferably a croissant or a Danish pastry.

18. Method for preparing a freezer-to-oven glazed laminated dough product, in particular a laminated *Viennoiserie* dough product, comprising:
- preparing a non-leavened, non-proofed dough; thereafter
- folding the non-leavened, non-proofed dough thereby obtaining a laminated non-leavened, non-proofed dough; thereafter
- cutting the laminated non-leavened, non-proofed dough into portions thereby obtaining non-leavened, non-proofed dough portions for the laminated dough product; thereafter
- shaping the non-leavened, non-proofed dough portions, thereby obtaining a non-leavened, non-proofed shaped laminated dough product; thereafter
- subjecting the non-leavened, non-proofed, shaped laminated dough product to relaxation, typically for about 5 to about 30 min, in particular for about 10 to about 20 min more in particular for about 12-18 min, thereby obtaining a non-leavened, non-proofed, shaped laminated dough product; thereafter
- flattening or compressing the non-leavened, non-proofed, shaped laminated dough product, thereby obtaining a flattened or compressed non-leavened, non-proofed, shaped laminated dough product; thereafter
- glazing the flattened or compressed non-leavened, non-proofed, shaped laminated dough product, thereby obtaining the glazed laminated dough product; and
- freezing the glazed non-leavened, non-proofed laminated dough product, thereby obtaining the freezer-to-oven glazed laminated dough product.

19. Method according to claim 18, wherein the relaxation is done at a temperature of 18 degrees C or less, preferably in the range of 10-18 degrees C, in particular about 15 degrees C.

20. Method according to claim 18 or 19, wherein the dough product is freezer-to-oven frozen croissant dough product.

21. Method according to any of claims 18-20, wherein the folding is done at a temperature of 18 degrees C or less, preferably in the range of 10-18 degrees C, in particular about 15 degrees C and wherein the folding comprises a plurality of folding actions and wherein between at least a first folding action and a last folding action the dough is cooled by keeping it in a freezer.

22. Method according to any of claims 18-21, wherein the glazing composition comprises a carbohydrate, water, an oil and an emulsifier, which glazing composition preferably is as defined in the preceding claims 4, 5, 6 or 7.

23. Glazed laminated dough product, obtainable by a method according any of the claims 18-22, preferably a croissant or Danish pastry.

24. Glazed laminated bakery product, obtainable by heating, in particular baking a glazed laminated dough product according to claim 23.
